Europäisches Patentamt

European Patent Office

Office européen des brevets

(11) Numéro de publication : **0 342 756 B1**

# (12) FASCICULE DE BREVET EUROPEEN

(45) Date de publication du fascicule du brevet :
**07.09.94 Bulletin 94/36**

(51) Int. Cl.⁵ : **H04N 7/00**

(21) Numéro de dépôt : **89201228.7**

(22) Date de dépôt : **17.05.89**

(54) **Système d'émission et réception de télévision à haute définition à débit de données réduit.**

(30) Priorité : **20.05.88 FR 8806788**

(43) Date de publication de la demande :
**23.11.89 Bulletin 89/47**

(45) Mention de la délivrance du brevet :
**07.09.94 Bulletin 94/36**

(84) Etats contractants désignés :
**AT BE CH DE ES FR GB GR IT LI LU NL SE**

(56) Documents cités :
**EP-A- 0 160 547
WO-A-87/04034
WO-A-87/05770
US-A- 4 575 756
US-A- 4 727 422
BRITISH BROADCASTING CORP., BBC RD
1987/11, UDC 621.397.3, septembre 1987,
pages 1-20, Londres, GB; G.A. THOMAS:
"Television motion measurement for DATV
and other applications"
COLLOQUE TVHD 87, Ottawa, 4-8 octobre
1987, tome 1, pages 6.2.2 - 6.2.28; P. BERNARD
et al.: "Analyse de structures de sous-
echantillonnage spatio-temporel d'un signal
TVHD en vue de sa transmission dans un
canal MAC"**

(73) Titulaire : **LABORATOIRES D'ELECTRONIQUE
PHILIPS
3, Avenue Descartes
F-94450 Limeil-Brévannes (FR)**
(84) **FR**
Titulaire : **N.V. Philips' Gloeilampenfabrieken
Groenewoudseweg 1
NL-5621 BA Eindhoven (NL)**
(84) **BE CH DE ES GB GR IT LI LU NL SE AT**

(72) Inventeur : **Guichard, Philippe
Societe Civile S.P.I.D.
209, rue de l'Université
F-75007 Paris (FR)**
Inventeur : **Haghiri, Mohammad
Societe Civile S.P.I.D.
209, rue de l'Université
F-75007 Paris (FR)**

(74) Mandataire : **Caron, Jean et al
Société Civile S.P.I.D.
156, Boulevard Haussmann
F-75008 Paris (FR)**

## Description

La présente invention concerne un système d'émission de télévision à haute définition, dans lequel l'image est divisée en plusieurs parties pour chacune desquelles est sélectionné un mode de transmission des données vidéo parmi au moins deux modes qui diffèrent l'un de l'autre par la structure d'échantillonnage, et un récepteur de télévision à haute définition pour représenter des images transmises par un tel système, dans lequel l'image est divisée en plusieurs parties pour chacune desquelles est déterminé, à partir d'une indication reçue de l'émetteur sous forme numérique, un mode de reproduction des données vidéo parmi au moins deux modes.

L'invention s'applique au système dit DATV (Digitally Assisted Television, en langue anglaise) dans lequel des données complémentaires des données vidéo sont transmises par voie numérique. Un tel système a pour but de réduire la bande passante de la voie vidéo.

Un système de ce type est connu par la conférence intitulée "Motion compensated interpolation applied to HD. MAC pictures encoding and decoding" par M.R. Haghiri et F. Fonsalas, présentée au "2nd International workshop on signal processing of HDTV", l'Aquila, 29 Fev.- 3 Mars 1988.

Dans le système proposé, le signal à transmettre est engendré par une caméra 50 Hz à image entrelacée à 1152 lignes avec 1440 pixels par ligne. Ce signal est supposé échantillonné à 54 MHz, ce qui est quatre fois la fréquence indiquée dans l'avis 601 du CCIR. Le but du codage est de réduire la bande passante du signal transmis d'un facteur 4, avec un débit de données numériques associé le plus réduit possible. A cet effet l'image est divisée en plusieur parties, ici des carrés de 16 x 16 pixels, et on utilise pour chaque partie un mode de transmission choisi parmi trois, chacun de ces modes étant caractérisé par la gamme des vitesses (des mouvements dans l'image) à laquelle il s'applique, et par la durée de transmission d'une image complète. Un mode "80 millisecondes", présente une fréquence-image de 12.5 Hz et s'applique aux parties d'images pratiquement fixes. Un mode "40 millisecondes" présente une fréquence-image de 25 Hz et s'applique aux vitesses allant jusqu'à quelques pixels par image. Un mode "20 millisecondes" présente une fréquence-image de 50 Hz et s'applique aux parties d'image où les objets ont les vitesses les plus grandes.

En outre, dans le mode 40 ms, on transmet un vecteur vitesse, valable pour la partie d'image considérée, qui permet au récepteur de créer une image intermédiaire entre deux images effectivement reçues.

Si l'on considère seulement les deux modes "40 ms" et "20 ms", le premier mode (40 ms) correspond à la détermination et à la transmission, via une voie numérique associée, d'un vecteur-vitesse pour chacune des parties d'image traitées dans ce mode, alors que dans le deuxième mode (20 ms) une image est décrite plus vite que dans le premier mode mais avec une définition spatiale inférieure. Des données sont en outre transmises dans la voie numérique pour définir le choix effectué pour chacune desdites parties.

La détermination et la transmission d'un vecteur-vitesse autorisent l'utilisation du mode 40 ms pour des vitesses maximales plus grandes. De ce fait le nombre de bits nécessaire pour transmettre la valeur de la vitesse locale est plus grand, et cette transmission consomme une partie notable de la capacité de transmission numérique, et peut même la dépasser. Afin de réduire le débit numérique, le système d'émission selon l'invention comporte avantageusement des moyens pour déterminer, pour une image complète, dans l'ensemble des vecteurs-vitesse des parties de cette image, un sous-ensemble contenant les vecteurs qui sont rencontrés le plus souvent dans cette image, des moyens pour transmettre numériquement la définition de tous les vecteurs de ce sous-ensemble, chaque vecteur-vitesse étant ensuite défini par référence à ce sous-ensemble, et des moyens pour sélectionner, pour chaque partie de l'image, soit le premier mode si le vecteur-vitesse de la partie d'image à transmettre est un élément de ce sous-ensemble, soit le deuxième mode si le vecteur-vitesse de la partie d'image à transmettre n'est pas un élément de ce sous-ensemble.

En outre un récepteur de télévision à haute définition destiné à la réception des signaux spécifiques émis par un système d'émission selon l'invention, récepteur dans lequel l'image est divisée en plusieurs parties pour chacune desquelles est déterminé à partir d'une indication reçue de l'émetteur sous forme numérique un mode de reproduction des données vidéo parmi au moins deux modes dont au moins un correspond à la réception d'un vecteur-vitesse pour la partie d'image courante, et comportant une mémoire pour mémoriser à chaque image une pluralité de vecteurs-vitesse, est remarquable ce qu'il est muni de moyens pour introduire dans cette mémoire le sous-ensemble, reçu de l'émetteur, contenant les vecteurs-vitesse qui sont rencontrés le plus souvent dans l'image et pour retrouver dans cette mémoire le vecteur-vitesse correspondant à une partie d'image à partir d'une définition, reçue de l'émetteur pour cette partie d'image, et faite par référence au dit sous-ensemble.

L'invention est ainsi basée sur la remarque que, comme cela sera expliqué plus en détail ci-après en référence aux figures, le sous-ensemble des vecteurs-vitesse les plus fréquents d'une image comprend la majorité des vecteurs déterminés dans l'image, et que la perte de définition résultant de l'exclusion des vecteurs qui ne font pas partie de ce sous-ensemble est limitée car il est alors possible de revenir au deuxième mode pour les parties d'image concernées, alors que le gain pour le débit de transmission numérique est important, du fait que le nombre de références de vecteurs, nécessaire pour définir ledit sous-ensemble, est peu important.

On peut remarquer que le document "Television motion measurement for DATV and other applications, Research Department report" publié par "the British broadcasting corporation" sous la référence BBC RD 1987/11 -UDC 621.397.3, mentionne l'utilisation d'un ensemble limité de vecteurs-vitesse à essayer pour une image. Néanmoins le système décrit par ce document est différent du système de la présente invention : notamment les vecteurs-vitesse sont déterminés dans une étape préalable par une méthode de "différenciation spatio-temporelle" qui fournit, sur une surface représentant les coordonnées des vecteurs-vitesse possibles, des pics aux coordonnées des vecteurs-vitesse rencontrés dans l'image ou la partie d'image. La limitation du nombre des vecteurs-vitesse à essayer est obtenue en ne prenant en compte que les pics dont la hauteur dépasse un seuil déterminé, et non par une méthode statistique. En outre, au lieu de déterminer en toute liberté le vecteur vitesse exact pour ensuite analyser son appartenance à un ensemble, le système présenté dans ce-document part d'un ensemble limité de vecteurs et recherche lequel est le plus satisfaisant ou le moins mauvais. Cette méthode peut conduire à des erreurs importantes dans le cas de mouvements erratiques dans une image car alors le vecteur le moins mauvais de l'ensemble n'est pourtant pas satisfaisant. Dans ce cas, puisque le mode appelé "2e mode" dans la présente description n'est pas prévu dans le système de ce document, lorsqu'un mouvement présente une vitesse pour laquelle aucun vecteur de l'ensemble ne convient vraiment, on peut seulement, soit revenir à une autre méthode de mesure de la vitesse, soit interpoler la vitesse à partir des parties d'image voisines, soit rajouter des vecteurs à l'ensemble. Dans tous les cas, cela conduit à un processus complexe et qui présente l'inconvénient que sa durée d'exécution n'est pas prévisible. L'application selon la présente invention d'un sous-ensemble de vecteurs déterminé statistiquement, dans un système employant les deux modes définis plus haut, ne présente aucun de ces inconvénients, et notamment permet que le débit soit constant et fixé à l'avance.

Dans une variante qui procure une réduction supplémentaire du débit numérique, le système selon l'invention est en outre remarquable en ce qu'il est muni de moyens pour, après avoir transmis la définition des vecteurs du sous-ensemble pour une image, transmettre pour l'image suivante seulement la définition de vecteurs-variation représentant chacun la variation d'un des vecteurs-vitesse par rapport à l'image précédente, cependant que le récepteur est muni, en plus des moyens pour mémoriser le dit sous-ensemble de vecteurs-vitesse reçu de l'émetteur, de moyens pour ajouter à ces vecteurs, dans la mémoire, des grandeurs représentant pour chaque image les variations par rapport à l'image précédente.

En outre, en appliquant aux vecteurs-variation le même concept que celui employé pour les vecteurs-vitesse, une nouvelle réduction du débit peut encore être obtenue, du fait que le système comporte des moyens pour déterminer, dans l'ensemble des vecteurs-variations d'une susdite image suivante, un sous-ensemble contenant les vecteurs-variation qui sont rencontrés le plus souvent dans cette image, des moyens pour transmettre numériquement la définition de tous les vecteurs-variation de ce sous-ensemble, chaque vecteur-variation étant ensuite défini par référence à ce sous-ensemble, et des moyens pour sélectionner, pour chaque partie de cette image, soit le premier mode si le vecteur-variation d'une partie d'image à transmettre est un élément de ce sous-ensemble, soit le deuxième mode si le vecteur-variation de la partie d'image à transmettre n'est pas un élément de ce sous-ensemble, cependant que le récepteur comporte une mémoire pour mémoriser à chaque image les vecteurs-variation qui sont rencontrés le plus souvent dans l'image, et des moyens pour retrouver dans cette mémoire le vecteur-variation correspondant à une partie d'image à partir d'une définition reçue de l'émetteur et faite par référence au sous-ensemble contenant les vecteurs-variation qui sont rencontrés le plus souvent dans l'image.

La description qui va suivre, en regard des dessins annexés décrivant des exemples non limitatifs fera bien comprendre comment l'invention peut être réalisée.

La figure 1 illustre un mode de définition d'un vecteur-vitesse.

La figure 2 représente un histogramme de fréquence d'occurrence des vitesses dans une image.

La figure 3 est un schéma bloc de l'ensemble des circuits de codage d'un système d'émission.

La figure 4 est un schéma bloc détaillé des éléments de circuit servant à la mise en oeuvre de l'invention.

Le système décrit ici à titre d'exemple a pour but de transmettre des images issues de sources définies par 1152 lignes par hauteur d'image, et 1440 pixels par largeur d'image, en utilisant seulement une bande passante vidéo correspondant à celle d'un standard à 625 lignes (576 lignes utiles de 720 pixels).

Pour permettre de reconstituer une partie des informations vidéo manquantes, des données numériques sont associées aux données vidéo.

Pour la transmission des signaux vidéo, trois modes différents sont utilisés:

Dans un mode "80 ms", à l'aide d'un filtrage numérique approprié, on transmet par exemple d'abord durant une période de 20 ms les pixels impairs des lignes impaires, durant les 20 ms suivantes les pixels impairs des lignes paires, durant les 20 ms suivantes les pixels pairs des lignes impaires, puis enfin les pixels pairs des lignes paires, le temps utilisé pour transmettre totalement une image étant donc de 80 ms. Néanmoins durant chaque période de 20 ms, toute la surface d'une image est décrite, ce qui permet la compatibilité avec les standards anciens à 625 lignes. En recombinant de manière appropriée les pixels décrits au cours de quatre périodes consécutives de 20 ms chacune, on peut recréer une image à haute définition. Pour cela il faut que l'image source n'ait pratiquement pas varié au cours des 80 ms. Ce mode s'applique donc aux images fixes ou quasi-fixes.

Dans un mode "40 ms", toujours après filtrage approprié, on ne transmet par exemple que les lignes paires, dont on transmet, en deux fois, tous les pixels. Pendant une période de 20 ms on transmet les pixels impairs, puis pendant la période suivante les pixels pairs (on pourrait aussi imaginer de ne transmettre qu'un pixel sur deux, mais pour toutes les lignes). On a donc perdu la moitié de la définition, mais l'image est décrite en 40 ms, c'est-à-dire deux fois plus vite, ce qui autorise certains mouvements.

Dans ce mode "40 ms", on dispose en outre d'un vecteur-vitesse pour chaque partie d'image. La mesure des vitesses dans chaque partie d'image est indépendante du processus de transmission des valeurs des vitesses. Le document de la conférence à l'Aquila mentionné plus haut décrit une manière de mesurer les vitesses, et le document BBC RD 1987/11 en décrit plusieurs autres. On peut, par exemple dans la réalisation décrite ici, partir d'une partie d'image-source, déplacer cette partie d'une quantité déterminée, mesurer la différence (par une méthode de moindres carrés appliquée à la luminance des pixels) avec la même partie de l'image-source suivante, et essayer ainsi tous les déplacements possibles ; après quoi, on retient celui qui conduit à la plus petite différence.

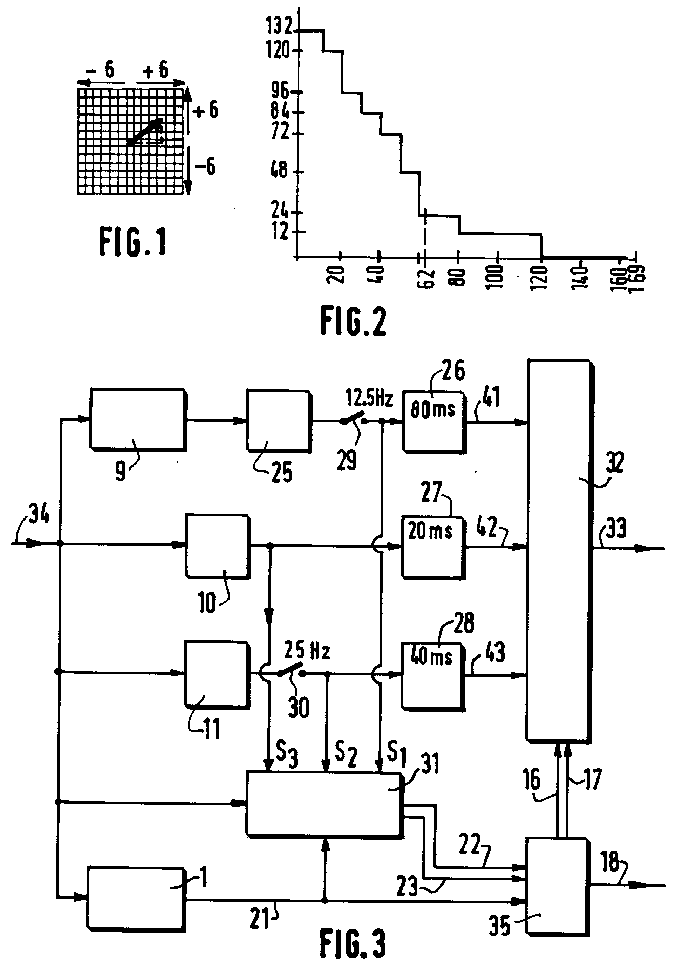

La figure 1 montre un vecteur vitesse, qui représente le déplacement d'un objet en 20 ms, et qui a ici des coordonnées x = +4, y = +3 exprimées en pixels/20ms. Si on s'impose de ne pas traiter de coordonnées supérieures à ± 6 pixels/40ms, chaque déplacement à essayer correspond à la distance entre le pixel central origine du vecteur et l'un des pixels représentés chacun par un des carrés d'un damier de 13 x 13, ce qui représente 169 essais. Cette méthode devient de plus en plus lourde lorsque le nombre de déplacements à essayer augmente, mais comme ce processus est mis en oeuvre à l'émission, c'est-à-dire là ou le matériel est présent à un seul exemplaire, une grande complexité n'est pas très gênante, du moment que les récepteurs, eux, restent simples.

Le vecteur-vitesse permet de créer dans le récepteur une image intermédiaire et de l'insérer temporellement entre deux images transmises. Pour créer une image intermédiaire, on part d'une image transmise, et on y déplace les parties mobiles selon le vecteur-vitesse afférent, indiqué par l'émetteur. On peut aussi se servir des deux images entre lesquelles il s'agit d'insérer une image supplémentaire. Pour plus de détails sur la manière de recréer cette image, on peut se reporter aux publications mentionnées en préambule. Grâce à l'image ainsi ajoutée, on double encore la définition temporelle de l'image, ce qui permet d'utiliser ce mode même lorsque des vitesses importantes existent dans l'image. Néanmoins l'image intermédiaire n'est correcte que si les vitesses sont stables ou quasi-stables. Dans le cas contraire où de grandes accélérations sont présentes, on utilise un troisième mode "20 ms".

Dans ce mode "20 ms", on transmet seulement, pendant une période de 20 ms, par exemple les pixels impairs des lignes impaires, et au cours des 20 ms suivantes, on transmet de façon identique une nouvelle image. Ainsi la définition temporelle est excellente du fait que la fréquence de répétition des images est de 50 Hz, ce qui permet la transmission de tous les mouvements sans effets de flou ou de mouvement saccadé. Par contre la définition spatiale est faible (on n'a transmis qu'un pixel sur quatre) et correspond à celle du standard à 625 lignes. Ceci n'est pas trop gênant, car l'oeil est moins sensible à l'absence de définition spatiale lorsque les objets observés se déplacent rapidement.

L'image est divisée en parties, par exemple ici des carrés de 16 x 16 pixels, et pour chacune de ces parties ou "blocs", un mode différent peut être utilisé. Aussi dans le cas d'objets mobiles devant un paysage de fond, ce dernier pourra être décrit avec tous ses détails en mode 80 ms, cependant qu'à l'intérieur de polygones constitués de carrés de 16 x 16 pixels et entourant au plus près les objets mobiles, un mode 40 ms ou 20 ms sera localement utilisé.

En outre, pour simplifier le traitement des données, on convient de traiter les séquences d'images dans le cadre d'intervalles de temps invariables de 80 ms, et de ne pas diviser ces 80 ms en plus de deux intervalles.

On a donc seulement cinq cas possibles, lorsqu'il s'agit de remplir un intervalle de 80 ms :

1 - soit avec une seule image "80 ms"

2 - soit avec une image "40 ms" suivie de deux images "20 ms"

3 - soit avec deux images "20 ms" suivies d'une image "40 ms".

4 - soit avec deux images "40 ms"

5 - soit avec quatre images "20 ms".

Chaque intervalle de 80 ms est traité comme un tout autonome, c'est-à-dire indépendant des intervalles voisins. Pour chaque intervalle de 80 ms, la définition de la possibilité utilisée parmi les cinq cas décrits ci-dessus, ainsi que des données associées à chacun des modes, doivent être transmises aux récepteurs. Le nombre de bits nécessaire dépend du nombre de situations possibles : le premier cas 1 correspond à une seule situation. Il en est de même pour le cas 5. Par contre, dans les cas 2 et 3 qui comprennent un mode "40 ms", il faut transmettre en plus la valeur du vecteur vitesse.

Supposons d'abord que l'invention n'est pas mise en oeuvre. Soit un vecteur-vitesse avec une amplitude maximale (dans chaque direction verticale/horizontale) de ± 6 pixels par période de 20 ms. Ceci correspond à $13^2 = 169$ vecteurs possibles, soit 169 situations possibles (voir la figure 1).

Dans le cas 4, il faut définir deux vecteurs (un pour chacune des deux périodes de 40 ms), ce qui correspond à 169 premiers vecteurs x 169 seconds vecteurs, soit $169^2$ situations.

Le nombre total de situations correspondant aux cinq cas, est la somme des situations dans chaque cas, soit :

```
Cas 1 : 1
Cas 2 : 169
Cas 3 : 169
Cas 4 : 169² = 28561
Cas 5 : 1
Total   28901
```

Une situation parmi 28901 peut être définie au moyen de 15 bits.

Ces 15 bits doivent être redéfinis pour chacune des parties de l'image. Si ces parties sont des carrés de 16 x 16, dans une image de 1440 x 1152 pixels, il y a 6480 parties. En outre il y a 12,5 intervalles de 80 ms par seconde. Au total un débit de 15 bits x 6480 carrés x 12,5 intervalles = 1215000 bits/seconde, sera nécessaire. Ce débit est supérieur à ce qu'il est prévu d'allouer à ce type d'informations dans, par exemple, le standard D2 MAC-paquets (environ 1Mbits/s pendant les retours de trame).

On est donc obligé, dans ces conditions, de limiter les vecteurs à ± 3 pixels. En effet il y a alors pour chaque carré $7^2 = 49$ vecteurs possibles, et au total pour décrire les cinq cas : $1 + 49 + 49 + 49^2 + 1 = 2501$ situations, que 12 bits peuvent décrire. Le débit est alors de 12 x 6480 x 12,5 = 972000 bits/sec, ce qui est admissible. Mais il est regrettable de limiter la grandeur des vecteurs-vitesse utilisables au détriment de la qualité de l'image. On a donc cherché un moyen de transmettre des vecteurs de ± 6 pixels/20 ms, ou même plus grands encore, avec un débit numérique maximal disponible d'environ 1M bits/seconde.

A cet effet, une fois la vitesse déterminée pour chacun des 6480 éléments d'image, on procède à un traitement statistique, au moyen d'un processeur logique, pour déterminer un histogramme de fréquence d'apparition des vecteurs-vitesse. La figure 2 représente un exemple tout à fait arbitraire d'histogramme des vitesses. Dans chaque partie d'image on peut rencontrer 169 vecteurs différents : l'échelle horizontale est donc graduée en 169 divisions. L'échelle verticale représente le nombre d'occurrences pour chacun des 169 vecteurs dans une image complète. On a groupé les vecteurs par dix pour faciliter le décompte des occurrences : il est évident qu'en réalité les "marches d'escalier" de l'histogramme sont dix fois plus fines (une par vecteur). Il faut bien noter aussi que l'échelle horizontale ne représente pas la grandeur des vecteurs, ceux-ci étant classés de la gauche vers la droite par fréquence d'apparition décroissante.

Selon l'invention, on détermine donc un sous-ensemble de vecteurs qui sont rencontrés le plus souvent. Par exemple on peut prendre les 62 vecteurs les plus à gauche sur l'histogramme. Ils correspondent ici à 5568 occurrences sur les 6480 que comporte une image (6480 est le nombre des parties d'image), et on a supposé pour le tracé de l'histogramme, que tous les carrés étaient traités en mode "40 ms".

On transmet une seule fois par image les caractéristiques de ces 62 vecteurs. Ils peuvent être définis par une matrice de 13 x 13 (correspondant au damier de la figure 1) dans laquelle sont présents des "un" pour les vecteurs retenus et des "0" pour les vecteurs éliminés. Une telle matrice est transmissible au moyen de 169 bits par image de 40 ms, soit 338 bits au maximum par intervalle de 80 ms, pour les deux images du cas 4.

Dans chaque partie d'image, on définit ensuite le vecteur par référence au sous-ensemble des 62 vecteurs, en indiquant par exemple le numéro de son rang dans la description initiale. Par exemple, en lisant la matrice dans un ordre prédéterminé, le vecteur numéro 1 correspond au premier "un" rencontré, et ainsi de suite.

Il y a donc, pour chacun des cas "2" ou "3" : 62 situations possibles, au lieu de 169, et selon un calcul semblable à celui effectué plus haut, la somme de toutes les situations possibles pour une partie d'image pendant un intervalle de 80 ms est de :

```
Cas 1 : 1
Cas 2 : 62
Cas 3 : 62
Cas 4 : 62²
Cas 5 : 1
Total   3970
```

Une situation peut donc être définie en 12 bits. Le débit par intervalle de 80 ms est alors de 12 bits x 6480 parties, plus les 338 bits de description initiale, c'est-à-dire 78098 bits, soit 976225 bits/seconde, ce qui est compatible avec la capacité offerte par les retours trame des standards D et D2MAC-paquet.

Pour les éléments d'image dont le vecteur ne fait pas partie du sous-ensemble de ce vecteur, on utilise le mode "20 ms". Ceci correspond, selon l'histogramme de la figure 2, à 980 occurences, soit seulement 14% des parties d'image. En outre, l'absence de ces vecteurs non transmis ne correspond pas obligatoirement à une dégradation de l'image : en effet, si l'on n'avait pas utilisé l'invention, on aurait été obligé, pour respecter le débit maximum possible, de limiter la longueur des vecteurs à ± 3 pixels/20 ms, et toutes les parties d'image présentant un vecteur plus grand auraient dû être traitées en mode "20 ms", et leur nombre aurait probablement été encore plus grand.

L'exemple ci-dessus avec un choix de 62 vecteurs transmissibles correspond assez bien à l'utilisation du maximum de capacité du canal numérique. Néanmoins cet exemple est pessimiste. En effet, il est très fréquent que de nombreuses parties d'image aient le même vecteur vitesse. L'exemple le plus évident est celui d'un panoramique sur un paysage à l'infini : tous les éléments d'image ont le même vecteur vitesse. En cas de translation d'objets de grande dimension, toutes les parties d'image recouvertes par cet objet ont aussi le même vecteur-vitesse. De ce fait l'histogramme des vecteurs classés par fréquence d'occurrence est souvent beaucoup plus concentré dans la partie gauche que celui de la figure 2, et le nombre de vecteurs éliminés est plus faible encore.

Il faut noter aussi que la procédure décrite ci-dessus est simplifiée, car rien n'interdit de choisir un nombre maximal de vecteurs transmissibles différent dans chacun des cas 2, 3 et 4. De même, rien n'interdit de choisir des sous-ensembles de contenus différents dans chacun des cas, même si le nombre de vecteurs transmissibles est identique. La seule quantité qui est imposée par la capacité de débit numérique est $N_2 + N_3 + N_{41} \times N_{42}$, en appelant respectivement N2, N3, N41, N42 le nombre de vecteurs retenus pour être transmis dans l'image "40 ms" du cas 2, dans l'image "40 ms" du cas 3, et dans la première puis la seconde image "40 ms" du cas 4.

A partir du relevé des fréquences d'occurrence des vecteurs correspondant à chacun des cas 2 à 4, il est aisé d'imaginer, à partir des connaissances générales de l'homme du métier en matière de mathématiques, des procédures de minimisation de la somme N2 + N3 + N41 x N42, adaptées à la séquence traitée.

Un avantage supplémentaire de l'invention est que la taille des vecteurs n'est plus limitée. En effet, si on accroît la capacité de définition d'un vecteur, c'est uniquement lors de la description initiale des vecteurs, une fois par 40 ms, que cette augmentation de capacité s'applique. Supposons que par exemple, on veuille transmettre un vecteur de ± 15 pixels au maximum, ce qui implique une matrice de 31 x 31 au lieu de 13 x 13. On devrait alors transmettre 961 bits par intervalle de 40 ms au lieu des 169 mentionnés plus haut, ce qui représente un accroissement négligeable de seulement 9900 bits par seconde.

Selon une caractéristique supplémentaire de l'invention, on peut encore gagner sur le débit numérique par la mesure suivante : dans le cas 4 on a deux images successives en mode "40 ms" dans un même intervalle de base de 80 ms ; on transmet la première de ces deux images de la manière décrite ci-dessus, et par contre, en ce qui concerne la deuxième image, pour chacun des vecteurs choisis dans la première image en fonction de leur plus grande fréquence d'apparition, on transmet seulement la variation par rapport à l'image précédente. Ces variations qui ont des composantes verticales et horizontales sont donc des vecteurs, appelés vecteurs-variation.

Dans le premier exemple ci-dessus donné en référence à la figure 2, il y a 62 vecteurs conservés sur 169 possibles pour la première image. Avec des vecteurs-vitesse de ± 6 pixels on peut passer par exemple d'un vecteur -6 à un vecteur +6, soit une variation de +12, et conséquent l'amplitude maximale des vecteurs-variation pour la seconde image est de ± 12 pixels par 20 ms dans chaque direction (horizontale et verticale). L'ensemble des variations possibles est donc constitué d'une matrice de 25 x 25, soit 625 possibilités. Cependant, la plupart du temps, les vitesses évoluent peu d'une image à l'autre : un objet lancé à une certaine vitesse conserve en général cette vitesse pendant au moins un certain temps. Donc les vecteurs-variation sont, en général, d'amplitude faible : de ce fait ils nécessitent peu de bits pour leur transmission. En outre, parmi l'ensemble des vecteurs-variation, il y a un certain nombre de sous-ensembles constitués de vecteurs égaux. On peut donc appliquer aux vecteurs-variations la même technique que celle utilisée pour les vecteurs-vitesse : ils sont classés par ordre de fréquence d'apparition, puis on ne conserve que le sous-ensemble contenant les vecteurs-variations les plus fréquents, et on transmet, une fois par 2e image (de 40 ms) du cas 4, la description initiale de ces vecteur-variations, et ensuite pour chaque carré de 16 x 16 pixels, chaque vecteur-variation est défini par son rang dans le sous-ensemble. En reprenant l'exemple décrit plus haut en référence à la figure 2, on peut supposer que parmi les variations des 62 vecteurs conservés pour la première image de 40 ms, on ne transmet que les 14 variations différentes les plus souvent rencontrées. Alors la description initiale de 14 vecteurs parmi 625 possibles consomme 625 bits pour la deuxième période de 40 ms du cas 4 (au lieu de 169). Il faut noter que dans ce cas, au lieu de transmettre les "un" de la matrice 25 x 25, comme dans le cas de la matrice 13 x 13 expliqué plus haut, il est plus avantageux de transmettre la description de chaque vecteur du sous-ensemble. Chacun d'eux pouvant être décrit par dix bits, on consomme alors quatorze fois dix bits (soit 140 bits au lieu de 625) pour la description initiale des 14 vecteurs retenus.

Le nombre de situations possibles par intervalle de 80 ms pour chaque carré de 16 x 16 est de :

```
Cas 1 : 1
Cas 2 : 62
Cas 3 : 62
Cas 4 : 62 x 14
Cas 5 : 1
Total : 994
```

Ce nombre peut être décrit par 10 bits. Alors le débit, pour un intervalle de 80 ms, sera de 169 + 169 + 140 pour la description initiale des vecteurs du cas 3, des cas 2 et 4-première image, et du cas 4-deuxième image, respectivement, ajoutés à 6480 carrés x 10 bits = 64800 bits c'est-à-dire 65278 bits par intervalle de 80ms, soit un débit de 815975 bits par seconde. On a encore gagné près de 20% par rapport à la version de base de l'invention, tout en améliorant l'efficacité. Ce gain peut être utilisé pour augmenter les possibilités de transmission. Par exemple en utilisant 12 bits pour décrire le nombre de situations par intervalle de 80 ms, ce nombre maximal est de $2^{12} = 4096$ et on peut choisir par exemple N2 = N3 = N41 = 186 et N42 = 20, puisque 1 + 186 + 186 x 20 + 1 = 4094 ! Ceci n'est qu'un exemple puisque, comme on l'a signalé plus haut, seul le total des bits est imposé et un choix différent peut être fait pour N2, pour N3 et pour N41, en optimisant la somme N2 + N3 + N41 x N42.

Pour résumer les différentes situations possibles : supposons qu'on ait initialement déterminé que le cas 4 s'applique. Si, pour un carré, le vecteur-vitesse de la première image ne fait pas partie du sous-ensemble on passe au cas 3, et on regarde si le vecteur-vitesse de la deuxième image fait partie du même sous-ensemble. Si c'est le cas, on est définitivement dans le cas 3. Se ce n'est pas le cas, on passe au cas 5. Si c'est seulement au cours de la seconde image que le vecteur-variation ne fait pas partie du sous-ensemble des vecteurs-variations les plus fréquents, on repasse alors au cas 2.

La figure 3 représente un schéma bloc d'un système de codage à l'émission, afin de définir le contexte de l'invention ainsi que sa situation matérielle.

Les images arrivent séquentiellement, selon un balayage par lignes, sur la connexion 34. Elles sont traitées simultanément par trois voies en parallèle, respectivement (9, 25, 29, 26), (10, 27), (11, 30, 28).

La voie "80 ms" comporte en cascade un filtre temporel 9, un filtre spatial 25, un commutateur 29 à 12,5 Hz, et un circuit d'échantillonnage 26 réalisant un "sous-échantillonnage", c'est-à-dire un échantillonnage au quart de la fréquence qui correspond à la définition complète des pixels. Cette branche décrit une image complète en 80 ms.

La voie "20 ms" comporte en cascade un filtre spatial 10 et un circuit de sous-échantillonnage 27, échantillonnant une image complète en 20 ms. Cette voie décrit une image complète, à basse définition, en 20 ms.

La voie "40 ms" comporte un filtre spatial 11 ainsi d'un interrupteur 30 à 25 Hz et un sous-échantillonneur 28. Elle transmet une image toutes les 40 ms.

Le signal d'entrée 34 est amené aussi à un circuit 1 d'estimation des vecteurs-vitesse, qui calcule la vitesse correspondant à chacune des partie d'image telles que définies plus haut. Ce circuit 1 indique la valeur des vecteurs-vitesse sur la connexion 21.

Un circuit de contrôle de sélection 31 reçoit à la fois la description instantanée de l'image par la connexion 34, les vecteurs-vitesse par la connexion 21, et la description instantanée fournie par chacune des trois voies sur ses entrées $S_1$, $S_2$, $S_3$. Ce circuit complexe compare avec l'image source 34 les images fournies par chacune des trois voies, en utilisant en outre le vecteur vitesse dans le cas de la voie "40 ms", et ceci pour chaque partie d'image (carrés de 16 x 16 pixels). La voie dont l'image est la plus proche de l'image source est choisie, un choix spécifique étant fait pour chacun des carrés.

Pour simplifier, on n'a pas représenté différents retards qui doivent être introduits en pratique pour différentes raisons, la plus évidente étant que, pour disposer de l'image complète "80 ms" et la comparer, il faut attendre d'avoir reçu la quatrième des quatre périodes successives de 20 ms, et que pour appliquer correctement une correction au moyen du vecteur-vitesse, il faut disposer des deux images encadrant temporellement l'image courante. De ce fait le circuit de contrôle 31 fournit simultanément sur les connexions respectivement 22, 23, deux décisions concernant deux images successives en mode 40 ms d'un même intervalle de 80 ms, images qu'on nommera "-1" et "0".

La référence 35 désigne un bloc dans lequel est mise en oeuvre l'invention et qui comporte notamment des éléments de correction des décisions issues du circuit 31. Les vecteurs-vitesses lui sont fournis par la connexion 21, et les décisions initiales par les connexions 22, 23. Les décisions corrigées sont fournies sur les connexions 16, 17, et les éléments numériques à transmettre sur la connexion 18.

En fonction des décisions corrigées 16, 17 et à partir des signaux 41, 42, 43 fournis par les trois voies, un multiplexeur 32 transmet la voie sélectionnée sur la sortie 33 analogique à bande passante comprimée.

A l'exception du bloc 35, tous ces éléments font partie de l'art antérieur, et une description plus détaillée, notamment en ce qui concerne les procédés de filtrage et d'échantillonnage, est fournie par les documents cités en préambule, et aussi par le document "A-HD-MAC coding system" par F.W.P. VREESWIJK et al, présenté à la conférence de l'Aquila, 29 Fev-3 mars 1988, et par la demande de brevet européen n° 89 200 887.1 déposée antérieurement par la Demanderesse, incorporés ici par référence.

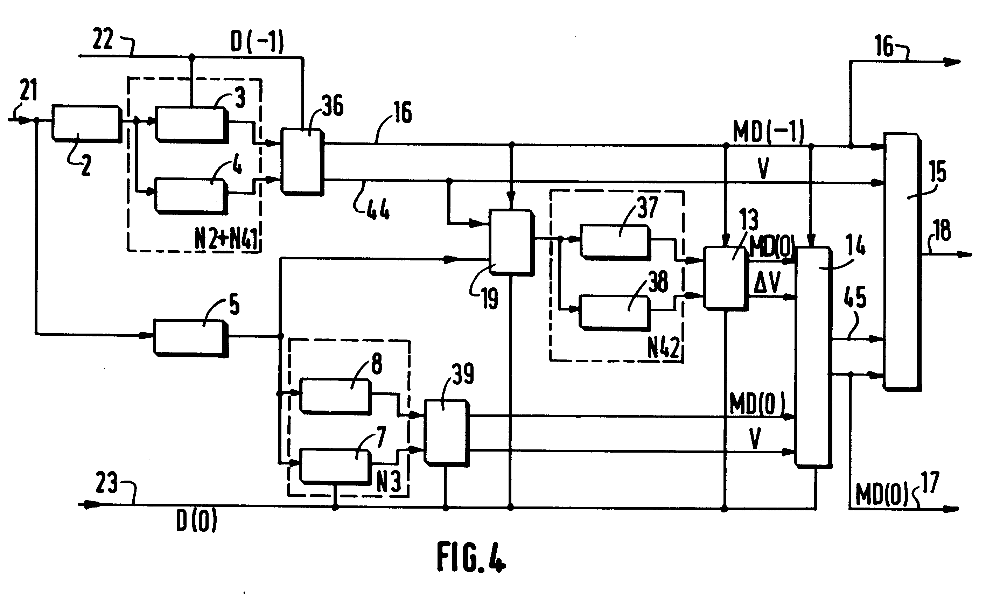

Le bloc 35 va maintenant être décrit plus en détail en référence à la figure 4. Comme décrit ci-dessus, les décisions initiales correspondant aux images 0 et -1 sont disponibles sur les connexions respectivement 22, 23 et le vecteur-vitesse sur la connexion 21.

Le signal de vecteur-vitesse traverse un circuit 2 apportant un retard de 40 ms, pour mettre en phase chaque vecteur de l'image 0 avec celui de l'image -1. Un circuit 3 reçoit ce vecteur-vitesse retardé et aussi la décision D(-1) de choix d'une parmi les trois voies, concernant l'image -1. Le circuit 3 est un élément processeur qui, à l'issue de la description complète d'une image, établit un classement des vecteurs-vitesse par ordre de fréquence d'occurrence, et fournit à un élément 36 la description du sous-ensemble des vecteurs les plus fréquents. Le signal vecteur-vitesse présent à l'entrée du circuit 3 est transmis à l'élément 36 par un circuit 4 de retard, qui correspond au temps utilisé par le processeur 3 pour établir le classement. L'élément 36 détermine si le vecteur-vitesse transmis par le circuit 4 fait partie du sous-ensemble délivré par le processeur 3. Si ce n'est pas le cas, la décision D(-1) est éventuellement modifiée pour imposer le choix de la voie "20 ms". Le signal de choix final modifié MD(-1) est fourni sur la connexion 16. Si le mode "40 ms" est choisi (le vecteur-vitesse fait partie du sous-ensemble), le numéro du vecteur-vitesse correspondant est fourni sur la connexion 44. Le choix effectué au moyen des élément 3, 4, 36 est celui concernant la première image "40 ms" d'un intervalle de 80 ms, c'est-à-dire qu'il fournit une des données dont le nombre a été appelé plus haut, soit N2 soit N41.

Au travers d'un circuit 5 de compensation de retard correspondant à la durée des divers traitements exécutés dans les éléments 3, 4, le vecteur vitesse est amené aux éléments 7, 8 et 19. La décision D(0) concernant l'image 0, sur la connexion 23, est amenée aussi à l'élément processeur 7 et à un élément 39. Les sorties des éléments 7, 8 sont aussi amenées à l'élément 39. L'ensemble des éléments 7, 8, 39 est identique, au point de vue structure et fonctionnement, à l'ensemble des éléments, respectivement, 3, 4, 36. L'élément 39 fournit donc une décision corrigée MD(0) concernant l'image 0, et un vecteur vitesse V, qui sont amenés au circuit 14. Ces données sont l'une de celles dont le nombre a été appelé plus haut : N3.

Le vecteur vitesse sélectionné de l'image -1, sur la connexion 44, et celui disponible à la sortie du circuit de compensation de retard 5 sont tous deux amenés au circuit 19 qui calcule la variation de vitesse lorsque les décisions MD(1) et D(0), sur les connexions 16 et 23, correspondent au cas 4. Ces vecteurs-variations sont fournis aux éléments 37, 38 exactement comme les vecteurs-vitesse le sont aux éléments respectivement 3, 4 ou 7, 8. Ces éléments sont constitués et fonctionnent de la même manière et fournissent à l'élément 13, identique aux éléments 36 ou 39, la description des vecteurs-variations les plus fréquents. Ce circuit détermine si le vecteur-variation transmis par le circuit de retard 38 fait partie du sous-ensemble décrit par le processeur 37. A partir des décisions MD(-1) et D(0) il détermine alors la décision finale MD(0), éventuellement modifiée. Celle-ci est fournie au circuit 14 ainsi que, s'il y a lieu, le vecteur-variation courant ΔV.

Le circuit 14 est un multiplexeur qui fournit en sortie sur la connexion 17 le choix définitif MD(0) pour l'image (0), choisi parmi ses deux entrées MD(0) selon que l'on est dans le cas 3 ou dans le cas 4. Il fournit sur une connexion 45 le vecteur-vitesse ou le vecteur-variation selon le cas.

Le circuit de mise en forme 15 reçoit d'une part la description des sous-ensembles de vecteurs-vitesse et de vecteurs-variation à transmettre une fois par période de 80 ms, puis pour chaque partie d'image la décision MD(-1) et la décision MD(0), ainsi que éventuellement un vecteur courant (sur les connexions 44 et 45), il met ces données en forme et les fournit sur la sortie 18 pour être émises selon un format prédéterminé sur le canal numérique de transmission.

Un récepteur pour reproduire des images émises selon l'invention comporte les circuits de l'art antérieur connus de l'homme du métier, et notamment des moyens pour décoder les données numériques lui permettant de savoir pour chaque partie d'image quel est le cas choisi à l'émission, des moyens de convolution et de commutation lui permettant de reconstituer à chaque instant l'image en correspondance avec le mode d'émission, et aussi des moyens pour, dans le mode "40 ms" recréer une image intermédiaire entre deux images transmises.

En plus de ces circuits, il comporte une mémoire dans laquelle sont enregistrés les vecteurs-vitesse d'une image "40 ms", et/ou les vecteurs variations de l'image "40 ms" suivante, et un système d'adressage qui, à partir d'une référence reçue de l'émetteur par le canal numérique pour chacun des carrés de 16 x 16 pixels, permet de lire dans la mémoire les coordonnées du vecteur-vitesse ou du vecteur-variation. On peut y enregistrer les vecteurs-variations puis ensuite, pour chaque carré, lire le vecteur-vitesse et le vecteur-variation et les ajouter alors l'un à l'autre. On peut aussi pour chaque description d'un vecteur-variation reçu de l'émetteur, lire en mémoire le vecteur-vitesse correspondant (celui concernant le même carré de l'image précédente), ajouter ces deux vecteurs l'un à l'autre, et renvoyer la somme en mémoire à la place du vecteur-vitesse initial. Ceci économise des positions en mémoire, mais suppose que la description des vecteurs-variation de la deuxième image a lieu seulement après que la reproduction de la première image est terminée.

De toutes les façons, si l'émetteur transmet pour la deuxième image les vecteurs-variation d'un sous-ensemble moins nombreux que celui des vecteurs-vitesse de la première image, on n'ira pas chercher un vecteur manquant en mémoire pour les carrés de la seconde image n'ayant pas donné lieu à la transmission d'un vecteur variation, puisqu'on aura reçu de l'émetteur un signal désignant pour eux le mode "20 ms".

## Revendications

1. Système d'émission de télévision à haute définition, dans lequel l'image est divisée en plusieurs parties pour chacune desquelles est sélectionné un mode de transmission des données vidéo parmi au moins deux modes qui diffèrent l'un de l'autre par la structure d'échantillonnage, le premier mode correspondant à l'utilisation d'un vecteur-vitesse pour chacune des parties d'image traitées dans ce mode, alors que dans le deuxième mode une image est décrite plus vite que dans le premier mode mais avec une définition spatiale inférieure, le système comportant des moyens de mesure des vecteurs-vitesse travaillant indépendamment sur chacune des parties, et des moyens pour transmettre sur un voie numérique associée les vecteurs-vitesse et des données pour définir la sélection effectuée pour chacune desdites parties, caractérisé en ce qu'il comporte des moyens pour compter, pour une image complète, dans l'ensemble des vecteurs-vitesse des parties de cette image, le nombre de fois qu'un même vecteur-vitesse est rencontré, et déterminer un sous-ensemble contenant les vecteurs qui sont rencontrés le plus souvent dans cette image, des moyens pour transmettre numériquement la définition de tous les vecteurs de ce sous-ensemble, chaque vecteur-vitesse étant ensuite défini par référence à ce sous-ensemble, et des moyens pour sélectionner, pour chaque partie de l'image, soit le premier mode si le vecteur-vitesse de la partie d'image à transmettre est un élément de ce sous-ensemble, soit le deuxième mode si le vecteur-vitesse de la partie d'image à transmettre n'est pas un élément de ce sous-ensemble.

2. Système selon la revendication 1, caractérisé en ce qu'il est muni de moyens pour, après avoir transmis la définition des vecteurs du sous-ensemble pour une image, transmettre pour l'image suivante seulement la définition de vecteurs-variation représentant chacun la variation d'un des vecteurs-vitesse par rapport à l'image précédente.

3. Système selon la revendication 2, caractérisé en ce qu'il comporte des moyens pour déterminer, dans l'ensemble des vecteurs-variations d'une susdite image suivante, un sous-ensemble contenant les vecteurs-variation qui sont rencontrés le plus souvent dans cette image, des moyens pour transmettre numériquement la définition de tous les vecteurs-variation de ce sous-ensemble, chaque vecteur-variation étant ensuite défini par référence à ce sous-ensemble, et des moyens pour sélectionner, pour chaque partie de cette image, soit le premier mode si le vecteur-variation d'une partie d'image à transmettre est un élément du sous-ensemble, soit le deuxième mode si le vecteur-variation de la partie d'image à transmettre n'est pas un élément du sous-ensemble.

4. Récepteur de télévision à haute définition destiné à la réception des signaux spécifiques émis par un système d'émission selon la revendication 1, récepteur dans lequel l'image est divisée en plusieurs parties pour chacune desquelles est déterminé à partir d'une indication reçue de l'émetteur sous forme numérique un mode de reproduction des données vidéo parmi au moins deux modes dont au moins un correspond à la réception d'un vecteur-vitesse pour la partie d'image courante, et comportant une mémoire pour mémoriser à chaque image une pluralité de vecteurs-vitesse, caractérisé en ce qu'il est muni de moyens pour introduire dans cette mémoire le sous-ensemble, reçu de l'émetteur, contenant les vecteurs-vitesse qui sont rencontrés le plus souvent dans l'image et pour retrouver dans cette mémoire le vecteur-vitesse correspondant à une partie d'image à partir d'une définition, reçue de l'émetteur pour cette partie d'image, et faite par référence au dit sous-ensemble.

5. Récepteur selon la revendication 4, caractérisé en ce qu'il est muni, en plus des moyens pour mémoriser le dit sous-ensemble de vecteurs-vitesse reçu de l'émetteur, de moyens pour ajouter à ces vecteurs, dans la mémoire, des grandeurs représentant pour chaque image les variations par rapport à l'image précédente.

6. Récepteur selon la revendication 4, caractérisé en ce qu'il comporte une mémoire pour mémoriser à chaque image les vecteurs-variation qui sont rencontrés le plus souvent dans l'image, et des moyens pour retrouver dans cette mémoire le vecteur-variation correspondant à une partie d'image à partir d'une définition reçue de l'émetteur et faite par référence au sous-ensemble contenant les vecteurs-variation qui sont rencontrés le plus souvent dans l'image.

7. Procédé d'émission de télévision à haute définition, selon lequel l'image est divisée en plusieurs parties pour chacune desquelles est sélectionné un mode de transmission des données vidéo parmi au moins deux modes qui diffèrent l'un de l'autre par la structure d'échantillonnage, le premier mode correspondant à l'utilisation d'un vecteur-vitesse pour chacune des parties d'image traitées dans ce mode, alors que dans le deuxième mode une image est décrite plus vite que dans le premier mode mais avec une définition spatiale inférieure, les vecteurs-vitesse étant mesurés indépendamment sur chacune des parties, et étant transmis sur une voie numérique associée ainsi que des données pour définir la sélection effectuée pour chacune desdites parties, caractérisé en ce que l'on compte, pour une image complète, dans l'ensemble des vecteurs-vitesse des parties de cette image, le nombre de fois qu'un même vecteur-vitesse est rencontré et determine un sous-ensemble contenant les vecteurs qui sont rencontrés le plus souvent dans cette image, on transmet numériquement la définition de tous les vecteurs de ce sous-ensemble, chaque vecteur-vitesse étant ensuite défini par référence à ce sous-ensemble, on sélectionne, pour chaque partie de l'image, soit le premier mode si le vecteur-vitesse de la partie d'image à transmettre est un élément de ce sous-ensemble, soit le deuxième mode si le vecteur-vitesse de la partie d'image à transmettre n'est par un élément de ce sous-ensemble.

8. Procédé selon la revendication 7, caractérisé en ce que, après avoir transmis la définition des vecteurs du sous-ensemble pour une image, on transmet pour l'image suivante seulement la définition de vecteurs-variation représentant chacun la variation d'un des vecteurs-vitesse par rapport à l'image précédente.

9. Procédé selon la revendication 8, caractérisé en ce que l'on détermine, dans l'ensemble des vecteurs-variations d'une susdite image suivante, un sous-ensemble contenant les vecteurs-variation qui sont rencontrés le plus souvent dans cette image, on transmet numériquement la définition de tous les vecteurs-variation de ce sous-ensemble, chaque vecteur-variation étant ensuite défini par référence à ce sous-ensemble, et on sélectionne, pour chaque partie de cette image, soit le premier mode si le vecteur-variation d'une partie d'image à transmettre est un élément de ce sous-ensemble, soit le deuxième mode si le vecteur-variation de la partie d'image à transmettre n'est pas un élément de ce sous-ensemble.

## Patentansprüche

1. Fernsehsendesystem hoher Auflösung, bei dem das Bild in mehrere Teile unterteilt wird, für die jeweils aus mindestens zwei sich durch die Abtaststruktur unterscheidenden Betriebsarten eine Sende-Betriebsart für die Videodaten ausgewählt wird, wobei die erste Betriebsart der Verwendung eines Geschwindigkeitsvektors für jeden der mit dieser Betriebsart verarbeiteten Bildbereiche entspricht, während in der zweiten Betriebsart ein Bild schneller als in der ersten Betriebsart, jedoch mit geringerer räumlicher Auflösung beschrieben wird, wobei das System in den einzelnen Bildbereichen unabhängig arbeitende Einrichtungen zum Messen der Geschwindigkeitsvektoren und Mittel zum Übertragen der Geschwindigkeitsvektoren und der digitalen Daten eines Geschwindigkeitsvektors auf einem zugehörigen digitalen Kanal umfaßt, um die für jeden der Bildbereiche getroffene Wahl zu definieren, dadurch gekennzeichnet, daß das System Mittel umfaßt, die für ein vollständiges Bild aus der Gesamtheit der Geschwindigkeitsvektoren der einzelnen Bildbereiche dieses Bildes die Häufigkeit zählen, mit der derselbe Geschwindigkeitsvektor festgestellt wird, und eine Untergruppe bestimmen, die die in diesem Bild am häufigsten vorkommenden Vektoren enthält, ferner Mittel zum digitalen Übertragen der Definition aller Vektoren dieser Untergruppe, wobei jeder Geschwindigkeitsvektor danach unter Bezugnahme auf diese Untergruppe definiert wird, und Mittel, mit denen für jeden Bildbereich entweder die erste Betriebsart, wenn der Geschwindigkeitsvektor des zu übertragenden Bildbereichs zu dieser Untergruppe gehört, oder aber die zweite Betriebsart gewählt wird, wenn der Geschwindigkeitsvektor des zu übertragenden Bildbereichs nicht zu dieser Untergruppe gehört.

2. System nach Anspruch 2, dadurch gekennzeichnet, daß es mit Einrichtungen versehen ist, die nach Übertragung der Definition der Vektoren der Untergruppe für ein Bild für das folgende Bild nur die Definition von Abweichungsvektoren übertragen, die jeweils der Abweichung eines der Gesehwindigkeitsvektoren gegenüber dem vorhergehenden Bild entsprechen.

3. System nach Anspruch 2, dadurch gekennzeichnet, daß das System Mittel umfaßt, die aus der Gesamtheit der Abweichungsvektoren eines Folgebildes eine Untergruppe bestimmen, die die in diesem Bild am häufigsten vorkommenden Abweichungsvektoren enthält, ferner Mittel zum digitalen Übertragen der Definition aller Abweichungsvektoren dieser Untergruppe, wobei jeder Abweichungsvektor danach unter Bezugnahme auf diese Untergruppe definiert wird, und Mittel, mit denen für jeden Bildbereich dieses Bildes entweder die erste Betriebsart, wenn der Abweichungsvektor des zu übertragenden Bildbereichs zu dieser Untergruppe gehört, oder aber die zweite Betriebsart gewählt wird, wenn der Abweichungsvektor des zu übertragenden Bildbereichs nicht zu dieser Untergruppe gehört.

4. Fernsehempfanger hoher Auflösung für den Empfang spezieller, von einem Aussendesystem nach Anspruch 1 ausgesandter Signale, bei dem das Bild in mehrere Teile unterteilt wird, für die jeweils anhand einer vom Sender in digitaler Form erhaltenen Angabe eine Betriebsart für die Wiedergabe der Videodaten aus mindestens zwei Betriebsarten ausgewählt wird, von denen mindestens eine dem Empfang eines Geschwindigkeitsvektors für den gültigen Bildbereich entspricht, und der einen Speicher zum Speichern einer Vielzahl von Geschwindigkeitsvektoren pro Bild aufweist, dadurch gekennzeichnet, daß er Mittel besitzt, durch die die vom Sender übermittelte Untergruppe, die die im Bild am häufigsten auftretenden Geschwindigkeitsvektoren enthält, in diesen Speicher eingegeben und der einem Bildbereich entsprechende Geschwindigkeitsvektor anhand einer Definition, die für den betreffenden Bildbereich vom Sender erhalten wurde und sich auf die genannte Untergruppe bezieht, aus dem Speicher abgerufen werden kann.

5. Empfänger nach Anspruch 4, dadurch gekennzeichnet, daß er zusätzlich Mitteln zum Speichern der vom Sender erhaltenen Abweichungsvektor-Untergruppe und Mittel besitzt, mit denen diesen Vektoren im Speicher Werte hinzugefügt werden können, die für jedes Bild die Abweichungen gegenüber dem vorhergehenden Bild repräsentieren.

6. Empfänger nach Anspruch 4, dadurch gekennzeichnet, daß er einen Speicher, mit dem für jedes Bild die am häufigsten im Bild auftretenden Abweichungsvektoren gespeichert werden, und Mittel aufweist, mit denen der Abweichungsvektor, der einem Bildbereich entspricht, anhand einer vom Sender erhaltenen und sich auf die Untergruppe, die die im Bild am häufigsten auftretenden Abweichungsvektoren enthält, beziehenden Definition wiederaufgefunden werden kann.

7. Fernsehsendeverfahren hoher Auflösung, nach dem das Bild in mehrere Teile unterteilt wird, für die jeweils aus mindestens zwei sich durch die Abtaststruktur unterscheidenden Betriebsarten eine Sende-Betriebsart für die Videodaten ausgewählt wird, wobei die erste Betriebsart der Verwendung eines Geschwindigkeitsvektors für jeden der mit dieser Betriebsart verarbeiteten Bildbereiche entspricht, während in der zweiten Betriebsart ein Bild schneller als in der ersten Betriebsart, jedoch mit geringerer räumlicher Auflösung beschrieben wird, wobei die Geschwindigkeitsvektoren in den einzelnen Bildbereichen unabhängig voneinander gemessen und ebenso wie Daten, die die für jeden der Bildbereiche getroffene Wahl definieren, auf einem zugehörigen digitalen Kanal übertragen werden, dadurch gekennzeichnet, daß man für ein vollständiges Bild aus der Gesamtheit der Geschwindigkeitsvektoren der einzelnen Bildbereiche dieses Bildes die Häufigkeit zählt, mit der derselbe Geschwindigkeitsvektor festgestellt wird, und eine Untergruppe bestimmt, die die in diesem Bild am häufigsten vorkommenden Vektoren enthält, die Definition aller Vektoren dieser Untergruppe digital überträgt, wobei jeder Geschwindigkeitsvektor danach unter Bezugnahme auf diese Untergruppe definiert wird, und für jeden Bildbereich entweder die erste Betriebsart, wenn der Geschwindigkeitsvektor des zu übertragenden Bildbereichs zu dieser Untergruppe gehört, oder aber die zweite Betriebsart wählt, wenn der Geschwindigkeitsvektor des zu übertragenden Bildbereichs nicht zu dieser Untergruppe gehört.

8. Verfahren nach Anspruch 7, dadurch gekennzeichnet, daß man nach Übertragung der Definition der Vektoren der Untergruppe für ein Bild für das folgende Bild nur die Definition von Abweichungsvektoren überträgt, die jeweils der Abweichung eines der Geschwindigkeitsvektoren gegenüber dem vorhergehenden Bild entsprechen.

9. Verfahren nach Anspruch 8, dadurch gekennzeichnet; daß man aus der Gesamtheit der Abweichungsvektoren eines Folgebildes eine Untergruppe bestimmt, die die in diesem Bild am häufigsten vorkommenden Abweichungsvektoren enthält, die Definition aller Abweichungsvektoren dieser Untergruppe digital überträgt, wobei jeder Abweichungsvektor danach unter Bezugnahme auf diese Untergruppe definiert wird, und für jeden Bildbereich dieses Bildes entweder die erste Betriebsart, wenn der Abweichungsvektor des zu übertragenden Bildbereichs zu dieser Untergruppe gehört, oder aber die zweite Betriebsart wählt, wenn der Abweichungsvektor des zu übertragenden Bildbereichs nicht zu dieser Untergruppe gehört.

## Claims

1. A high definition television transmission system, in which the image is divided into a plurality of parts, for each one of which a video data transmission mode is selected from among at least two modes which differ from one another by the sampling structure, the first mode corresponding to the use of a speed vector for each one of the image parts processed in this mode, while in the second mode an image is described more quickly than in the first mode but with a lower spatial definition, the system comprising means for measuring the speed vectors acting independently on each of the parts, and means for transmitting the speed vectors on an associated digital channel, and data for defining the selection made for each one of said parts,
characterized in that it comprises means for counting, for a complete image, in the set of the speed vectors of the parts of this image, the number of times one and the same speed vector is encountered and for determining a subset containing the vectors which are most frequently encountered in this image, means for digitally transmitting the definition of all the vectors of this subset, each speed vector being then defined by reference to this subset, and means for selecting, for each part of the image, either the first mode if the speed vector of the image part to be transmitted is an element of this subset, or the second mode if the speed vector of the image part to be transmitted is not an element of this subset.

2. A system as claimed in Claim 1, characterized in that, after having transmitted the definition of the vectors of the subset for an image, it is equipped with means for transmitting for a subsequent image only the definition of variation vectors each representing the variation of one of the speed vectors with respect to the preceding image.

3. A system as claimed in to Claim 2, characterized in that it comprises means for determining, in the set of the variation vectors of said following image, a subset containing the variation vectors which are most frequently encountered in this image, means for digitally transmitting the definition of all the variation vectors of this subset, each variation vector of each image part being defined by reference to this subset, and means for selecting, for each part of this image, either the first mode if the variation vector of an image part to be transmitted is an element of the subset, or the second mode if the variation vector of the image part to be transmitted is not an element of this subset.

4. A high-definition television receiver for receiving specific signals transmitted by a transmission system as claimed in Claim 1, in which receiver the image is divided into a plurality of parts, for each one of which a video data reproduction mode is determined from among at least two modes on the basis of an indication received from the transmitter in digital form and at least one of which modes corresponds to the reception of a speed vector for the current image part, and which receiver comprises a memory for storing at each image a plurality of speed vectors, characterized in that it is provided with means for entering into this memory the subset received from the transmitter and containing the speed vectors which are encountered most frequently in the image and for retrieving from this memory the speed vector corresponding to an image part on the basis of a definition received from the transmitter for this image part and made with reference to said subset.

5. A receiver as claimed in Claim 4, characterized in that, in addition to the means for storing said subset of speed vectors received from the transmitter, it is provided with means for adding to these vectors, in the memory, quantities representing for each image the variations with respect to the preceding image.

6. A receiver as claimed in Claim 4, characterized in that it comprises a memory for storing at each image the variation vectors which encountered most frequently in the image, and means for retrieving from this memory the variation vector corresponding to an image part on the basis of a definition received from the transmitter and made with reference to the subset containing the variation vectors which are encountered most frequently in the image.

7. A high definition television transmission method, in which the image is divided into a plurality of parts, for each one of which a video data transmission mode is selected from among at least two modes which differ from one another by the sampling structure, the first mode corresponding to the use of a speed vector for each one of the image parts processed in this mode, while in the second mode an image is described more quickly than in the first mode but with a lower spatial definition, the speed vectors being measured independently on each of the parts and being transmitted on an associated digital channel, and data for defining the selection made for each one of said parts, characterized by counting, for a complete image, in the set of the speed vectors of the parts of this image, the number of times one and the same speed vector is encountered and by determining a subset containing the vectors which are most frequently encountered in this image, by digitally transmitting the definition of all the vectors of this subset, each speed vector being then defined by reference to this subset, and by selecting, for each part of the image, either the first mode if the speed vector of the image part to be transmitted is an element of this subset, or the second mode if the speed vector of the image part to be transmitted is not an element of this subset.

8. A method as claimed in Claim 7, characterized in that, after having transmitted the definition of the vectors of the subset for an image, only the definition of variation vectors each representing the variation of one of the speed vectors with respect to the preceding image is transmitted for a subsequent image.

9. A method as claimed in Claim 8, characterized by determining, in the set of the variation vectors of said following image, a subset containing the variation vectors which are most frequently encountered in this image, by digitally transmitting the definition of all the variation vectors of this subset, each variation vector being subsequently defined by reference to this subset, and by selecting, for each part of this image, either the first mode if the variation vector of an image part to be transmitted is an element of this subset, or the second mode if the variation vector of the image part to be transmitted is not an element of this subset.

FIG.1

FIG.2

FIG.3

14

FIG.4

EP 0 342 756 B1